# EUROPÄISCHE PATENTANMELDUNG

(11) **EP 1 396 650 A1**
(43) Veröffentlichungstag der Anmeldung: **10.03.2004**
(21) Anmeldenummer: 03019417.9
(22) Anmeldetag: 28.08.2003
(51) Int. Cl.: F16D 1/076, F16D 1/033

(54) **Verbindungselement zur Befestigung eines Elektromotors**

(30) Priorität: 07.09.2002 DE 10241515
(71) Anmelder: Rexroth Indramat GmbH, 97816 Lohr am Main (DE)
(72) Erfinder: Gröning, Ingolf, 97816 Lohr am Main (DE); Schnurr, Bernd, 97816 Lohr am Main (DE)
(74) Vertreter: Thürer, Andreas

(57) **Zusammenfassung**

Die Erfindung betrifft ein Verbindungselement aus Metall zur lösbaren Befestigung eines Elektromotors (9) an einer von diesem angetriebenen Maschine (8) bzw. an einem von diesem angetriebenem Maschinenteil, mit wenigstens einer, an einer Wandung der Maschine (8) bzw. des Maschinenteils befestigbaren ersten Anlagefläche (12) und mit wenigstens einer, mit dem Elektromotor (9) fest verbindbaren zweiten Anlagefläche (13).

Es ist vorgesehen, dass die wenigstens eine erste Anlagefläche (12) und/oder die wenigstens eine zweite Anlagefläche (13) jeweils eine dünne metallische Beschichtung (5, 6, 7) mit einer Wärmeleitfähigkeit eines Wertes kleiner als ungefähr 2 W / K m (Watt x Kelvin-1 x Meter-1) aufweist.

## Beschreibung

Die Erfindung betrifft ein Verbindungselement zur Befestigung eines Elektromotors an einer Maschine bzw. an einem Maschinenteil, gemäß dem Oberbegriff des unabhängigen Anspruches.

Elektromotoren zum Antrieb von Maschinen bzw. von Maschinenteilen entwickeln im Betrieb unter höherer Beanspruchung relativ hohe Temperaturen. Da meist eine form- und/oder kraftschlüssige Verbindung zwischen Elektromotor und Maschine vorgesehen ist, überträgt sich die Wärme des Elektromotors auf die Maschine. Bei temperaturempfindlichen Maschinen bzw. Maschinenteilen muss eine Wärmeisolation bzw. eine Abfuhr der vom Elektromotor erzeugten Wärme gewährleistet werden. Dies kann beispielsweise durch eine Flüssigkeitskühlung erfolgen, bei der eine Kühlflüssigkeit in einem Verbindungselement zirkuliert. Das Verbindungselement ist in diesem Fall auf einer Seite mit der Maschine bzw. dem Maschinenteil und auf der anderen Seite mit dem Elektromotor verbunden, beispielsweise verschraubt, und sorgt für eine thermische Isolierung der Maschine vom Motor.

Ein Ziel der Erfindung besteht darin, ein gattungsgemäßes Verbindungselement zur Verfügung zu stellen, das eine gute thermische Isolierung einer Maschine bzw. eines Maschinenteils von einem mit diesem verbundenen Motor gewährleisten kann.

Dieses Ziel der Erfindung wird mit dem Gegenstand des unabhängigen Anspruchs erreicht. Merkmale vorteilhafter Weiterbildungen der Erfindung ergeben sich aus den abhängigen Ansprüchen.

Dem gemäß weist ein Verbindungselement aus Metall zur lösbaren Befestigung eines Elektromotors an einer von diesem angetriebenen Maschine bzw. an einem von diesem angetriebenen Maschinenteil wenigstens eine an einer Wandung der Maschine bzw. des Maschinenteils befestigbare erste Anlagefläche und wenigstens eine mit dem Elektromotor fest verbindbare zweite Anlagefläche auf. Erfindungsgemäß weist die wenigstens eine erste Anlagefläche und/oder die wenigstens eine zweite Anlagefläche jeweils eine dünne metallische Beschichtung mit einer Wärmeleitfähigkeit eines Wertes kleiner als ungefähr 2 Watt / Kelvin · Meter (W/Km) auf.

Eine solche metallische Beschichtung sorgt für eine Minimierung des Wärmeübergangs vom Elektromotor auf die Maschine. Durch die Verbesserung der Wärmeisolation kann der Motor mit höherer Last betrieben werden und kann dabei auch problemlos eine höhere Wärme entwickeln. Bei gleicher Baugröße des Elektromotors ist somit eine höhere Leistung und ein höheres Drehmoment zulässig. Eine solche dünne metallische Beschichtung wird auch als sog. Hard-Coat bezeichnet und wurde bisher in erster Linie an Innenwänden von Kühlrohren bzw. Kühlleitungen aufgebracht, um einen Korrosionsschutz zu gewährleisten. Insbesondere Aluminium und Gusseisen neigen bei länger andauerndem Kontakt mit Kühlflüssigkeit zum Korrodieren.

Ein geeignetes Material für die dünne metallische Beschichtung ist bspw. nitriertes Titan (TiN). Titannitrid haftet besonders gut auf eisenhaltigem Grundmaterial und weist eine hohe Abriebsbeständigkeit auf. Eine weitere Erhöhung der Widerstandsfähigkeit kann mit einer metallischen Beschichtung aus nitriertem und mit Kohlenstoff versetztem Titan (TiCN) erreicht werden.

Eine alternative Ausführungsform der Erfindung sieht vor, dass die dünne metallische Beschichtung eine nitrierte Legierung aus Titan und Aluminium (TiAlN) aufweist. Dieses Material weist neben seinen guten mechanischen Eigenschaften eine hohe Oxidationsbeständigkeit auf und bietet einen guten Widerstand gegen aggressive Medien aller Art.

Gemäß einer weiteren alternativen Ausführungsform der Erfindung weist die Beschichtung mit Kohlenstoff versetztes Chrom (CrC) auf. Dieses Beschichtungsmaterial weist neben seinen guten mechanischen Eigenschaften insbesondere eine hohe Temperaturbeständigkeit auf. Eine metallische Beschichtung aus nitriertem Chrom (CrN) weist eine hohe Beständigkeit gegen Korrosion und Oxidation auf. Alternative kann die Beschichtung auch Wolframcarbid (WC) aufweisen, wenn ein niedriger Reibungskoeffizienten gewünscht wird.

Die dünne metallische Beschichtung weist vorzugsweise eine Stärke zwischen weniger als 1 µm und bis zu 10 µm auf. Bei dieser Schichtdicke ist eine gute Wärmeisolierung gewährleistet und es bleiben trotzdem die elektrischen Eigenschaften des metallischen Verbindungselements erhalten, das beispielsweise für eine Masseverbindung zwischen Motor und Maschine sorgen kann. Die mögliche elektrische Funktion des Gehäuses als Schutzleiter wird nicht beeinträchtigt.

Das Befestigungselement kann an den ersten Anlageflächen Sacklöcher mit Innengewinden zur Schraubbefestigung des Verbindungselements an der Maschine bzw. am Maschinenteil aufweisen. Dieses Innengewinde bzw. diese Innengewinde der ersten Anlageflächen sind vorzugsweise ebenfalls mit der metallischen Beschichtung versehen. Auf diese Weise ist eine optimale Wärmedämmung der Maschine gegen die Verlustwärme des Elektromotors gewährleistet.

Das Befestigungselement kann zudem an den zweiten Amlageflächen Durchgangsbohrungen zur Schraubbefestigung des Elektromotors am Verbindungselement aufweisen. Vorzugsweise sind ,auch diese Durchgangsbohrungen mit einer dünnen metallischen Beschichtung versehen, die für eine Wärmeisolierung sorgt.

Gemäß einer weiteren Ausführungsform der Erfindung weist das Befestigungselement integrierte Kühlleitungen zur Zirkulation von Kühlflüssigkeit auf. Diese Kühlflüssigkeit sorgt für einen schnellen Abtransport der Verlustwärme vom Elektromotor und/oder für eine thermische Konstanz in Richtung auf die Maschine.

Als weiterer Vorteil des Hart-Coatings der Kontaktstellen zwischen Maschine und Motor ist die Verbesserung der Rautiefe zu nennen, so dass beim Montieren des Motors geringere Reibung herrscht.

Zusammenfassend ergeben sich die folgenden - sowie ggf. weiteren - Aspekte der Erfindung. Im Regelfall haben die Motoren eine Linienauflage oder punktförmige / kreisförmige Auflage zu der Maschine, an der sie angeschraubt sind. Ansonsten ist eine flächige Auflage vorhanden. Über die Linienauflage /punktförmige / kreisförmige / flächige Auflage und die Verschraubung wird die in dem Motor entstehende Wärme in die Maschine eingeleitet. Die Wärmeleitwerte bei diesem Übergang liegen typischerweise im Bereich von 500 bis 1000 W/Km. Durch den Auftrag eines Hart-Coats auf die Oberflächen, die Kontakt mit den Teilen haben, die wärmeleitfähig mit der Maschine verbunden sind, wird der Wärmeübergang an diesen Stellen drastisch reduziert. Die typische Wärmeleitfähigkeit eines Hart-Coats beträgt ca. 0,5 bis 1,2 W/Km. Da sich das Hart-Coat mit dem Grundmaterial verbindet, sind die gleichen Zugspannungen wie zuvor möglich.

Da die Aufträgsdicke des Hart-Coats gering ist, da es z.B. in einem flüssigen Bad aufgebracht wird, kann das Hart-Coat auch in den Gewindebohrungen aufgebracht werden, wodurch eine weitere Verbesserung der wärmeisolierenden Wirkung erreichbar ist.

Da der spezifische Widerstand des mit Hart-Coat überzogenen. Materials nur um den Faktor 10 größer ist als der des nicht überzogenen Materials (meist Aluminium), wirkt das Hart-Coat weiterhin als elektrischer Leiter, so dass in einem Fehlerfall eine Schutzfunktion als Schutzleiter nicht eingeschränkt wird.

Die Erfindung wird nachfolgend an einem Ausführungsbeispiel unter Bezugnahme auf die beiliegenden Figuren erläutert. Dabei zeigt:
- Figur 1: ein erfindungsgemäßes Verbindungselements im schematischen Schnitt und
- Figur 2: einen schematischen Schnitt des mit der Maschine und dem Elektromotor verbundenen Verbindungselements.

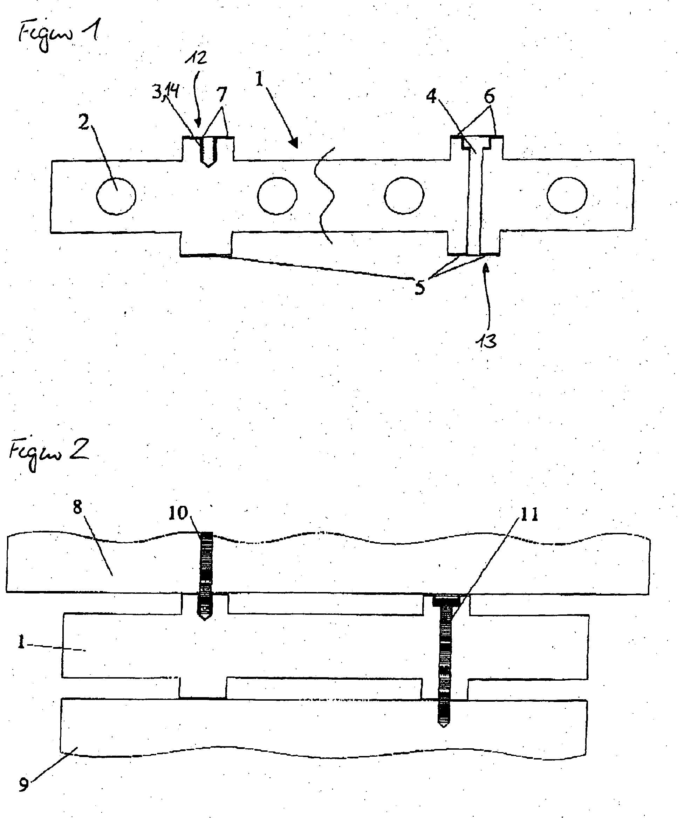

Figur 1 zeigt ein erfindungsgemäßes Verbindungselement 1, das eine längliche und/oder plattenförmige Kontur mit einer Reihe von Sockeln zur Befestigung des Verbindungselements an einer Maschine bzw. zur Verbindung mit einem Elektromotor aufweist. Auf einer linken Seite des Verbindungselements 1 ist eine erste Anlagefläche 12 zur Schraubverbindung des Verbindungselements mit einer Maschine 8 erkennbar. Das Verbindungselement 1 kann mittels Schrauben 10 mit der Maschine 8 verbunden werden (vgl. Figur 2). Hierzu wird von der Maschine 8 aus jeweils eine Schraube 10 in ein Sackloch 3 mit Innengewinde 14 der ersten Anlagefläche 12 geschraubt.

Das Verbindungselement 1 weist weiterhin zweite Anlageflächen 13 auf, die in ihrer Mitte eine Durchgangsbohrung 4 aufweisen. Diese Durchgangsbohrung 4 dient zur Befestigung eines Elektromotors 9 am Verbindungselement 1. Hierzu wird eine Schraube 11 durch die Durchgangsbohrung 4 gesteckt und mit dem Elektromotor 9 verschraubt. Wenigstens die ersten Anlageflächen 12 und die zweiten Anlageflächen 13 sind mit einer Beschichtung 5, 6, 7 versehen. Diese Beschichtung aus einen geeigneten Material (beispielsweise TiN, TiCN, TiAlN, CrC, CrN, WC) weist eine Dicke zwischen 1 und 10 µm auf und sorgt für einen sehr niedrigen Wärmeleitwert zwischen Verbindungselement und Elektromotor bzw. Verbindungselement und Maschine.,Dieser Wärmeleitwert liegt unterhalb von 2 W / K · m, wodurch eine sehr effektive Wärmeisolierung zwischen Motor und Maschine erreicht wird.

Das Verbindungselement 1 kann optional mit Kühlleitungen 2 versehen sein, innerhalb derer eine Kühlflüssigkeit zirkuliert und die an ihren Innenwandungen ggf. mit einer metallischen Beschichtung zur Korrosionsverhinderung versehen sind. Weiterhin können die Innengewinde 14 der Sacklöcher 3 und/oder die Innenwandungen der Durchgangsbohrungen 4 mit der dünnen metallischen Beschichtung aus einem der obengenannten Materialien versehen sein. Auf diese Weise wird eine weitere Verbesserung der Isolierung der Maschine von der Verlustwärme des Elektromotors erreicht.

### Bezugszeichenliste

- 1: Verbindungselement
- 2: Kühlleitung
- 3: Sackloch
- 4: Durchgangsbohrung
- 5: zweite Beschichtung
- 6: erste Beschichtung
- 7: erste Beschichtung
- 8: Maschine
- 9: Elektromotor
- 10: Schraube
- 11: Schraube
- 12: erste Anlagefläche
- 13: zweite Anlagefläche
- 14: Innengewinde

## Patentansprüche

1. Verbindungselement aus Metall zur lösbaren Befestigung eines Elektromotors (9) an einer von diesem ängetriebenen Maschine (8) bzw. an einem von diesem angetriebenem Maschinenteil, mit wenigstens einer, an einer Wandung der Maschine (8) bzw. des Maschinenteils befestigbaren ersten Anlagefläche (12) und mit wenigstens einer; mit dem Elektromotor (9) fest verbindbaren zweiten Anlagefläche (13),
**dadurch gekennzeichnet, dass**
die wenigstens eine erste Anlagefläche (12) und/oder die wenigstens eine zweite Anlagefläche (13) jeweils eine dünne metallische Beschichtung (5, 6, 7) mit einer Wärmeleitfähigkeit eines Wertes kleiner als ungefähr 2 W / K m (Watt x Kelvin⁻¹ x Meter⁻¹) aufweist.

2. Verbindungselement nach Anspruch 1, **dadurch gekennzeichnet, dass** die dünne metallische Beschichtung (5, 6, 7) nitriertes Titan (TiN) aufweist.

3. Verbindungselement nach Anspruch 1, **dadurch gekennzeichnet, dass** die dünne metallische Beschichtung (5, 6, 7) nitriertes und mit Kohlenstoff versetztes Titan (TiCN) aufweist.

4. Verbindungselement nach Anspruch 1, **dadurch gekennzeichnet, dass** die dünne metallische Beschichtung (5, 6, 7) eine nitrierte Legierung aus Titan und Aluminium (TiAlN) aufweist.

5. Verbindungselement nach Anspruch 1, **dadurch gekennzeichnet, dass** die dünne metallische Beschichtung (5, 6, 7) mit Kohlenstoff versetztes Chrom (CrC) aufweist.

6. Verbindungselement nach Anspruch 1, **dadurch gekennzeichnet, dass** die dünne metallische Beschichtung (5, 6, 7) nitriertes Chrom (CrN) aufweist.

7. Verbindungselement nach Anspruch 1, **dadurch gekennzeichnet, dass** die dünne metallische Beschichtung (5, 6, 7) Wolframcarbid (WC) aufweist.

8. Verbindungselement nach Anspruch 1, **dadurch gekennzeichnet, dass** die dünne metallische Beschichtung (5, 6, 7) mit Kohlenstoff versetztes Wolfram (W/C) aufweist.

9. Verbindungselement nach einem der Ansprüche 1 bis 8, **dadurch gekennzeichnet, dass** die dünne metallische Beschichtung (5, 6, 7) eine Stärke zwischen weniger als 1 µm und 10 µm aufweist.

10. Verbindungselement nach einem der Ansprüche 1 bis 9, **dadurch gekennzeichnet, dass** das Befestigungselement (1) an den ersten Anlageflächen (12) Sacklöcher (3) mit Innengewinden (14) zur Schraubbefestigung des Verbindungselementes (1) an der Maschine (8) bzw. am Maschinenteil aufweist.

11. Verbindungselement nach Anspruch 10, **dadurch gekennzeichnet, dass** das Innengewinde (14) der ersten Anlagefläche (12) mit einer dünnen metallischen Beschichtung (7) versehen ist.

12. Verbindungselement nach einem der Ansprüche 1 bis 11,
**dadurch gekennzeichnet, dass** das Befestigungselement (1) an den zweiten Anlageflächen (13) Durchgangsbohrungen (4) zur Schraubbefestigung des Elektromotors (9) am Verbindungselement (1) aufweist.

13. Verbindungselement nach Anspruch 12, dadurch gekenrizeichnet, däss die Durchgangsbohrungen (4) mit einer dünnen metallischen Beschichtung (6) versehen sind.

14. Verbindungselement-nach einem der Ansprüche 1 bis 13, **dadurch gekennzeichnet, dass** das Befestigungselement (1) integrierte Kühlleitungen (2) zur Zirkulation von Kühlflüssigkeit aufweist.
